# EUROPÄISCHE PATENTSCHRIFT

(11) **EP 1 448 466 B1**
(45) Veröffentlichungstag und Bekanntmachung des Hinweises auf die Patenterteilung: **30.05.2007**
(21) Anmeldenummer: 02803768.7
(22) Anmeldetag: 13.11.2002
(51) Int. Cl.: B65G 51/03, B29C 35/16

(54) **VORRICHTUNG ZUM GLEICHZEITIGEN FÖRDERN UND TEMPERIEREN VON FORMTEILEN**
DEVICE FOR SIMULTANEOUSLY CONVEYING AND REGULATING THE TEMPERATURE OF SHAPED PARTS
DISPOSITIF POUR SIMULTANEMENT TRANSPORTER ET REGULER LA TEMPERATURE DE PIECES MOULEES

(30) Priorität: 24.11.2001 DE 10157703
(43) Veröffentlichungstag der Anmeldung: 25.08.2004
(73) Patentinhaber: SACMI COOPERATIVA MECCANICI IMOLA SOCIETA' COOPERATIVA, 40026 Imola (BO) (IT)
(72) Erfinder: WEIDENMÜLLER, Ralf, 79576 Weil am Rhein (DE)
(74) Vertreter: Luppi, Luigi
(86) Internationale Anmeldenummer: PCT/EP2002/012653
(87) Internationale Veröffentlichungsnummer: WO 2003/045823

(56) Entgegenhaltungen:
- EP-A- 0 619 251
- US-A- 5 466 096
- US-A- 5 682 977

## Beschreibung

Die Erfindung betrifft eine Vorrichtung zum gleichzeitigen Fördern und Temperieren von Formteilen nach dem Oberbegriff des Anspruchs 1. Derartige Vorrichtungen, die nachfolgend als Temperierförderer bezeichnet werden, sind bekannt und werden insbesondere dazu eingesetzt, Kunststoff-Formteile unmittelbar nach ihrer Herstellung in einer Preßprägemaschine von dieser wegzutransportieren und dabei gleichzeitig rasch auf eine Temperatur abzukühlen, bei der sie formstabil sind.

Ein Beispiel für ein Kunststoff-Formteil, bei dem dies erforderlich ist, ist ein Schraubverschluß für eine Getränkeflasche. Solche Verschlüsse, die beispielsweise aus Polypropylen oder Polyethylen bestehen können, werden in großer Stückzahl im Spritzgußverfahren hergestellt und dabei in der Maschine bei einer Temperatur in der Größenordnung von 100°C entformt, bei der sie noch nicht formstabil sind. Um sie nach ihrer Herstellung direkt der Weiterverarbeitung zuführen zu können, müssen sie möglichst rasch auf die spezifizierte Verarbeitungstemperatur abgekühlt werden. Dabei muß der Durchsatz der Kühlvorrichtung der hohen Produktionsrate heutiger Spritzgußmaschinen, die in der Größenordnung von 1200 Verschlüssen pro Minute liegt, angepaßt sein.

Bekannte Temperierförderer bestehen typischerweise aus einem Fördergurt und über diesem angeordneten, temperierte Luft auf den Fördergurt blasenden Ventilatoren. Um aber mit einer solchen Anordnung einen hohen Durchsatz zu erzielen, ist eine große Länge und/oder Breite der Förderstrecke und damit eine entsprechende Baugröße des Temperierförderers erforderlich.

Aus der DE 199 07 210 A1 ist eine gattungsgemäße Vorrichtung zum Transportieren und gleichzeitigen Kühlen von Substraten für Informationsträgerscheiben wie CD, DVD oder dergleichen bekannt, bei der die Substrate während des Transports auf Trägem ruhen, die ihrerseits auf einem Luftkissen gleiten. Der Transport erfolgt durch das Luftkissen entlang eines offenen Kanals mit U-förmigem Querschnitt, in dessen Bodenplatte zur Erzeugung eines Luftkissens mit horizontaler Strömungskomponente eine Vielzahl von schrägen Lufteintrittsöffnungen vorgesehen sind. Um einen Teil der Luftströmung zur Kühlung auf die Substrate zu leiten, weisen die Träger jeweils eine vertikale und mehrere annähernd horizontale Bohrungen auf, die zusammen ein Verteilungssystem bilden, durch welches Luft im Träger zunächst zentral nach oben strömen und dann seitlich über das Substrat ausströmen kann. Diese Vorrichtung ist speziell auf die Bedürfnisse der CD- und DVD-Produktion abgestimmt und wegen der benötigten Träger mit internem Luftverteilungssystem relativ aufwendig.

Die US 4,418,482 lehrt eine Vorrichtung zum gleichzeitigen Transportieren und Kühlen von Kunststofflaschen nach dem Auswurf aus einer Spritzgußmaschine. Dabei liegen die Flaschen mit ihren Krägen auf zwei zueinander parallelen, sich gegensinnig drehenden Walzen auf und gleiten entlang eines zwischen diesen Walzen vorgesehenen Spaltes. Der Hauptteil jeder Flasche ragt dabei in einen unterhalb dieses Spaltes befindlichen Hohlraum, in den zur Kühlung ein Luftstrom eingeblasen wird. Die Funktionsweise dieser Vorrichtung basiert auf der Form der Kunststofflaschen und ist nur für Objekte solcher oder ähnlicher Form geeignet.

Die DE 25 09 469 B2 hat eine pneumatische Förderanlage zur Förderung stückförmigen Gutes zum Gegenstand, bei der die Förderstrecke durch einen allseitig geschlossenen, vertikal verlaufenden Kanal gebildet wird. Durch das Einblasen von Luft über schräge Öffnungen an einer Seite des Kanals wird in dem Kanal, dessen lichter Querschnitt etwa dem Querschnitt des Fördergutes entspricht, eine aufwärts gerichtete Luftströmung erzeugt, durch deren Staudruck das Fördergut in dem Kanal aufwärts bewegt wird. Die Vorrichtung dient ausschließlich dem Transport des Fördergutes. Dessen Temperatur ist nicht von Interesse.

Die US 5,466,096 bezieht sich auf eine Transporteinrichtung zum Fortbewegen von Objekten, wobei die Einrichtung einen geschlossenen Kanal und einen Gebläsen, mittels dessen die Objekte mit einer Luftströmung beaufschlagbar sind, aufweist. Der Kanal hat einen Grundplatten, wobei eine Vielzahl von schräg ausgerichteten Lufteintrittsöffnungen angeordnet sind, und einen Deckplatten, wobei eine Vielzahl von Luftaustrittsöffnungen angeordnet sind. Die erzeugte Luftströmung einleitbar ist, um im Kanal direkt die Fortbewegung der Objekte zu bewirken. Die Einrichtung dient ausschließich dem Transport des Objekten, dessen Temperatur ist nicht von Interesse.

Schließlich zeigt die JP 2000 280 265 A eine Kühlvorrichtung für Gegenstände aus Kunstharz, bei der Körbe in einer durch eine Luftströmung gekühlten Kammer umlaufen. Die ankommenden Gegenstände werden fortlaufend in den Körben abgelegt und nach einem Umlauf in der Kammer wieder aus den Körben entnommen.

In Anbetracht dieses Standes der Technik liegt der Erfindung die Aufgabe zugrunde, einen Temperierförderer zu schaffen, der bei kompakter Baugröße einen hohen Durchsatz an Formteilen mit hoher Gleichmäßigkeit temperieren kann.

Diese Aufgabe wird erfindungsgemäß durch eine Vorrichtung mit den Merkmalen des Patentanspruchs 1 gelöst. Vorteilhafte Ausgestaltungen der Erfindung sind in den Unteransprüchen angegeben.

Die Besonderheit der Erfindung liegt in der Doppelfunktion der zur Abkühlung der Formteile vorgesehenen Luftströmung, die durch den von ihr erzeugten Staudruck gleichzeitig auch direkt die Fortbewegung der Formteile bewirkt. Dadurch wird vorteilhaft eine separate Transportvorrichtung in Form eines Gurtes oder dergleichen eingespart.

Ferner werden die Formteile, die einzeln seriell aus der Spritzgußmaschine kommen, quer zur Förderrichtung auf eine gewisse Breite verteilt und parallel nebeneinander gefördert, wodurch die Länge der Förderstrecke relativ kurz gehalten werden kann. Bevorzugt werden die Formteile dann zur direkten Weiterverarbeitung wieder zu einer seriellen Abfolge gebündelt und einzeln nacheinander abgegeben.

Im folgenden wird ein Ausführungsbeispiel der Erfindung anhand der Zeichnungen beschrieben. In diesen zeigt
- **Fig. 1**: eine erste perspektivische Ansicht eines erfindungsgemäßen Temperierförderers mit Blick auf den Einlaß für Formteile bei geöffneter Deckplatte,
- **Fig. 2**: die Ansicht eines erfindungsgemäßen Temperierförderers aus der gleichen Blickrichtung wie in Fig. 1, jedoch betriebsbereit mit geschlossener Deckplatte,
- **Fig. 3**: eine Vergrößerung eines ersten Details aus der Ansicht von Fig. 1,
- **Fig. 4**: eine Vergrößerung eines zweiten Details aus der Ansicht von Fig. 1,
- **Fig. 5**: eine weitere Vergrößerung des zweiten Details aus Fig. 1, jedoch aus einer anderen Ansichtsrichtung als in Fig. 4, nämlich mit Blick auf den Auslaß für Formteile.

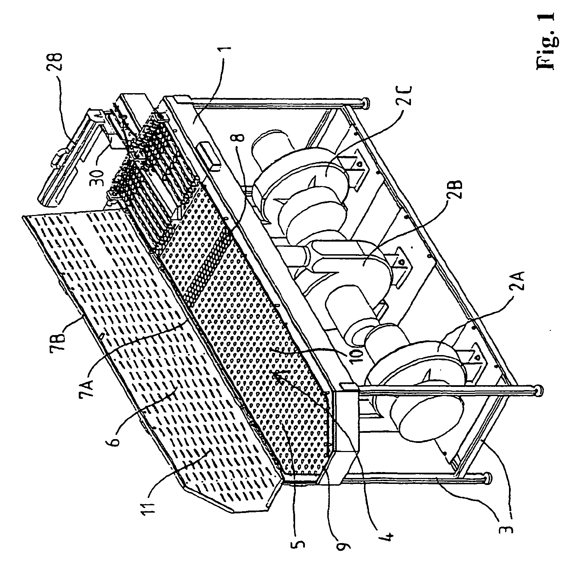

Wie Fig. 1 zeigt, ist bei einem erfindungsgemäßen Temperierförderer die Transporteinrichtung auf der Oberseite eines wannenartigen, länglichen Gehäuses 1 aufgebaut, das zusammen mit darunter angeordneten, regelbaren Gebläsen 2A bis 2C auf einem Trägerrahmen 3 aus miteinander verschraubten Profilschienen montiert ist.

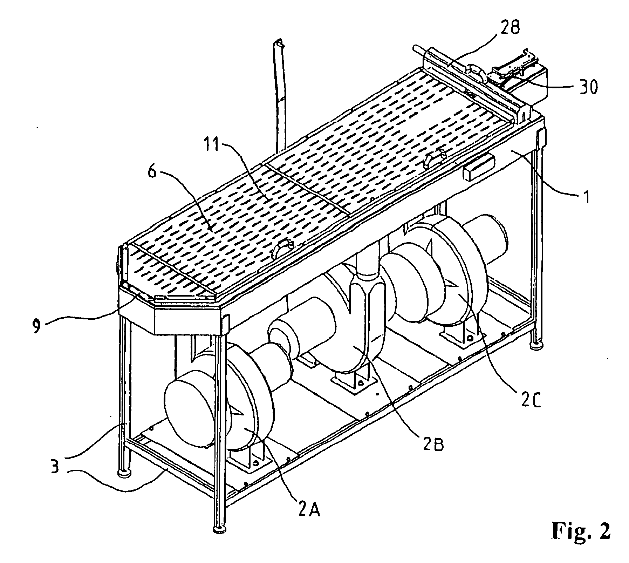

Bei der Transporteinrichtung handelt es sich um einen länglichen, geraden Kanal 4, der durch eine waagrechte Grundplatte 5, eine Deckplatte 6 und zwei Seitenwände 7A und 7B gebildet wird, wobei die beiden Seitenwände 7A und 7B an den Längskanten der Deckplatte 6 fest mit dieser verbunden sind und die Deckplatte 6 wiederum an einer Längsseite durch ein Scharnier mit der Grundplatte 5 verbunden ist, so daß der Kanal 4 durch einfaches Aufklappen der Deckplatte 6 zu Wartungs- oder Reparaturarbeiten geöffnet werden kann. Im Betrieb liegt die Deckplatte 6 parallel zur Grundplatte 5, so daß der Kanal 4 geschlossen ist. Diese Situation ist in Fig. 2 dargestellt. Während das Gehäuse 1, die Grundplatte 5 und die Seitenwände 7A und 7B aus verschiedenen Kunststoffen oder aus Metall bestehen können, ist für die Deckplatte 6 ein transparentes Material, wie z. B. Plexiglas, bevorzugt, damit der Betrieb der Vorrichtung ohne weiteres zu beobachten ist und Störungen sofort erkannt werden können.

Der Kanal 4 hat einen rechteckigen, entlang des überwiegenden Teils seiner Länge konstanten Querschnitt. Während die lichte Höhe des Kanals 4 annähernd der Höhe der zu fördernden Formteile 8 entspricht, beträgt die Breite des Kanals 4 ein Vielfaches der Breite eines solchen Formteils 8. Im folgenden wird davon ausgegangen, daß es sich bei den Formteilen 8 um Schraubverschlüsse 8 für Getränkeflaschen handelt, von denen in den Figuren 1 und 3 bis 5 einige dargestellt sind. Wie in diesen Figuren erkennbar ist, wird ferner vorausgesetzt, daß diese Verschlüsse 8 dem Temperierförderer von der Spritzgußmaschine mit der offenen Seite oben zugeführt werden. Außerdem wird angenommen, daß die Verschlüsse 8 einzeln seriell ankommen, weshalb der Kanal 4 an seinem Einlaß 9 schmäler ist als in seinem Hauptteil und sich vom Einlaß 9 aus zunächst aufweitet und dann in der Breite konstant bleibt.

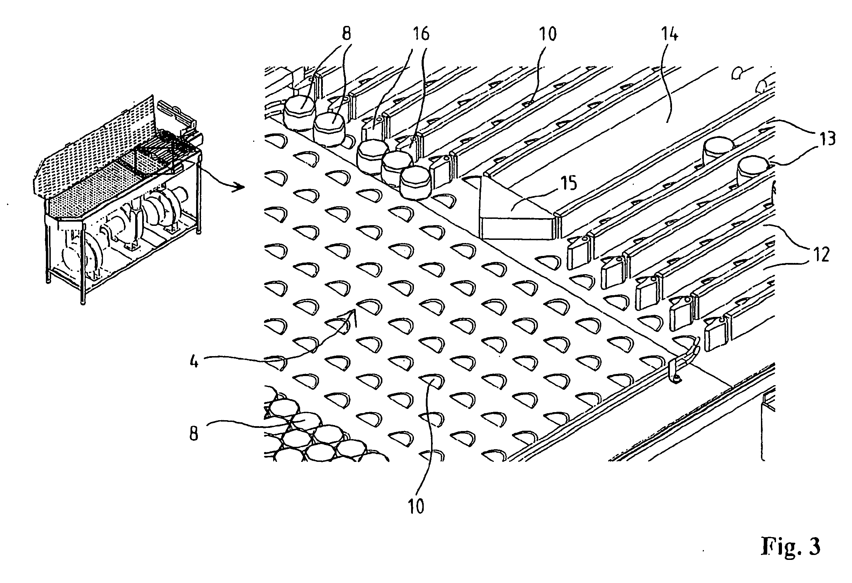

In der Grundplatte 5 sind in einer regelmäßigen matrixförmigen Anordnung eine Vielzahl von Lufteintrittsöffnungen 10 (Fig. 3) angeordnet, und zwar mit einer Blasrichtung in Längsrichtung des Kanals 4 und unter einem Winkel von näherungsweise 45° zur Oberfläche der Grundplatte 5. Die Form der Lufteintrittsöffnungen 10 ist mit der rückseitigen Form der Schneidwerkzeuge einer handelsüblichen Käsereibe vergleichbar, d.h. es handelt sich um ellipsoidförmige Auswölbungen der Grundplatte 5 nach unten, deren Tiefe die Dicke der Grundplatte 5 übertrifft, und die jeweils an einem in Querrichtung der Grundplatte 5 verlaufenden, geraden Schnitt in der Grundplatte 5 abrupt enden, so daß an diesem Schnitt eine vertikale Öffnung besteht. Die Lufteintrittsöffnungen 10 führen zu einem nach außen hin abgedichteten Hohlraum im Inneren des Gehäuses 1, der über Rohre mit den Gebläsen 2A bis 2C verbunden ist, so daß beim Betrieb der Gebläse 2A bis 2C die von diesen in das Gehäuse 1 eingeblasene Luft aus den Lufteintrittsöffnungen 10 schräg nach oben in den Kanal 4 strömt.

Die regelbaren Gebläse 2A bis 2C sind vorzugsweise jeweils einzeln oder gemeinsam zumindest mit einem Filter und optional auch mit einer Heizung ausgerüstet und liefern somit einen einstellbaren Durchsatz an gereinigter Luft vorbestimmbarer Temperatur. Die Reinigung des Luftstromes durch Filter kann beispielsweise dann erforderlich sein, wenn an die zu temperierenden Verschlüsse 8 im Hinblick auf ihre spätere Verwendung zur Verpackung von Lebens- oder Arzneimitteln bestimmte hygienische Anforderungen bestehen. Die Beheizung des Luftstromes kann bei starken Schwankungen der Umgebungstemperatur von Interesse sein.

In der Deckplatte 6 befinden sich in ebenfalls regelmäßiger matrixförmiger Anordnung eine Vielzahl von schlitzförmigen Luftaustrittsöffnungen 11, so daß sich im Betrieb der Vorrichtung innerhalb des Kanals 4 eine in Längsrichtung desselben schräg nach oben verlaufende, annähernd homogene Luftströmung ergibt. Es leuchtet ein, daß am Einlaß 9 in den Kanal 4 eingebrachte, heiße Verschlüsse 8 unter der Wirkung dieser Luftströmung in Längsrichtung des Kanals 4 befördert und dabei gleichzeitig durch Konvektion gekühlt werden. Die Verschlüsse 8 gleiten infolge der Vertikalkomponente der Luftströmung mit ihren Böden nahezu reibungsfrei auf einem Luftpolster über die Oberfläche der Grundplatte 5 und werden durch den Staudruck, den die Horizontalkomponente der Luftströmung an ihnen aufbaut, in Längsrichtung des Kanals 4 vorangetrieben. Die gegenüberliegende Deckplatte 6 verhindert dabei unkontrollierte Vertikalbewegungen, wie sie beispielsweise durch Stöße zwischen Verschlüssen untereinander entstehen könnten und gewährleistet durch die Festlegung der Kanalhöhe auf einen nur wenig über der Höhe der Verschlüsse liegenden Wert, daß kein Verschluß umkippen und dadurch eine Verklemmung des Materialflusses auslösen kann.

Durch die Aufweitung der Breite des Kanals 4 auf ein Vielfaches des Durchmessers eines Verschlusses 8 wird sichergestellt, daß auch bei einer vergleichsweise langsamen Fortbewegung der Verschlüsse 8 in dem Kanal 4 ein ausreichend hoher Durchsatz erzielt werden kann, indem sich die in rascher Folge einzeln am Einlaß 9 ankommenden Verschlüsse auf die gesamte Breite des Kanals 4 verteilen können, wie es in Fig. 1 in Form von drei Reihen von Verschlüssen 8 angedeutet ist.

Falls die Verschlüsse zum Zweck der Lagerung oder des Transportes nach ihrer Abkühlung in Behälter gefüllt werden sollten, so würde als Ausgang des Temperierförderers eine Art Trichter genügen, in den die Verschlüsse 8 durch die Luftströmung hineinbefördert werden könnten. Falls die Verschlüsse aber sofort der Weiterverarbeitung zugeführt werden sollen, dann müssen sie erneut zu der seriellen Abfolge gebündelt werden, in der sie am Einlaß 9 ankommen. Diese Aufgabe erfüllen weitere Abschnitte der bevorzugten Ausführungsform der Erfindung, die sich an den vorstehend beschriebenen Abschnitt anschließen. Diese weiteren Abschnitte werden im folgenden anhand der Figuren 3 bis 5 erläutert, in denen jeweils eine kleine Gesamtansicht des Temperierförderers und daneben ein vergrößerter Ausschnitt, der in der Gesamtansicht durch einen Rahmen gekennzeichnet ist, dargestellt sind.

Wie Fig. 3 zeigt, verzweigt sich der Kanal 4 zunächst in eine Reihe von zueinander parallel verlaufenden, durch dünne Trennwände 12 voneinander getrennten Teilkanälen 13, deren lichte Breite jeweils annähernd dem Durchmesser eines Verschlusses 8 entspricht. Die Lufteintrittsöffnungen 10 in der Grundplatte 5 setzen sich in den Teilkanälen 13 ebenso fort, wie die Luftaustrittsöffnungen 11 in der Deckplatte 6 über den Teilkanälen 13. Die Fortbewegung der Verschlüsse 8 erfolgt demzufolge innerhalb der Teilkanäle 13 genauso wie zuvor in dem gemeinsamen Kanal 4, jedoch nunmehr über die Breite der Vorrichtung nicht mehr zufällig verteilt, sondern in mehreren, geraden Kolonnen.

Wie in Fig. 3 zu erkennen ist, füllen die im Beispiel insgesamt zehn Teilkanäle 13 nicht die gesamte Breite des Kanals 4 aus, sondern die Teilkanäle 13 gliedern sich in zwei symmetrische Gruppen zu je fünf, zwischen denen ein nicht für Teilkanäle 13 genutzter Zwischenraum 14 besteht. An der Front dieses Zwischenraumes 14 zum Kanal 4 befindet sich ein keilförmiger Abweiser 15, der die aus dem Kanal 4 ankommenden Verschlüsse möglichst gleichmäßig und stauungsfrei auf die beiden Gruppen von Teilkanälen 13 verteilen soll. Zu diesem Zweck ist der Abweiser 15 in der Grundplatte 5 beweglich gelagert und wird im Betrieb der Vorrichtung durch einen unter der Grundplatte 5 angeordneten Antrieb in eine periodische Pendelbewegung versetzt.

An den Stirnseiten der Trennwände 12 sind jeweils kleinere, ebenfalls keilförmige, aber spitzwinkligere Abweiser 16 vorgesehen, die eine gleichmäßige Füllung der einzelnen Teilkanäle 13 jeder Gruppe bewirken und Blockaden an den Eingängen der Teilkanäle 13 verhindern sollen, wozu sie jeweils um eine vertikale Achse drehbar gelagert sind und im Betrieb der Vorrichtung zu einer Pendelbewegung nach Art eines Schiffsruders angetrieben werden. Dabei befindet sich die Drehachse jeweils nahe der Stirnfläche der Trennwand 12, so daß die in den Kanal 4 vorstehende Spitze eines Abweisers 16 den maximalen Ausschlag erfährt.

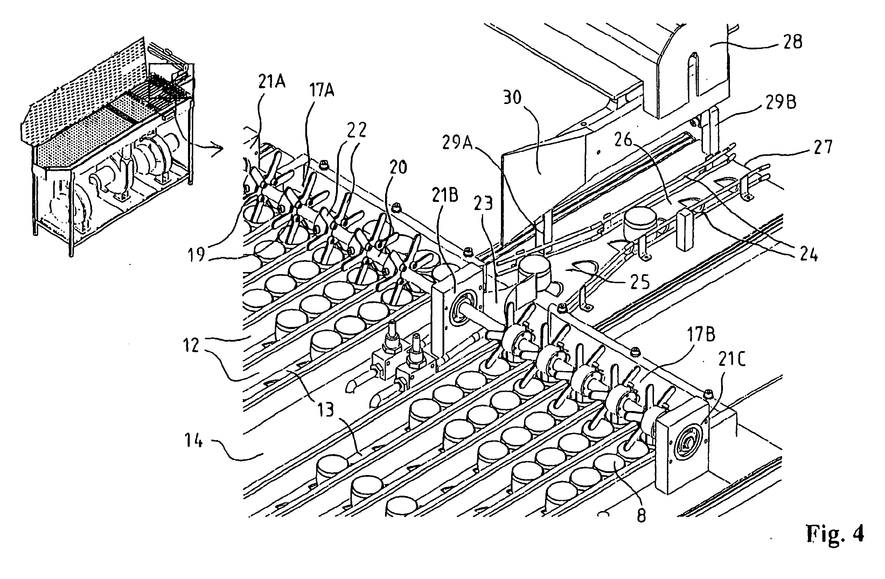

Um die mehreren Kolonnen von Verschlüssen 8 in den einzelnen Teilkanälen 13 zu einer einzigen zusammenzuführen, münden die Ausgänge jeder der beiden symmetrischen Gruppen von Teilkanälen 13 jeweils zunächst in einen Sammelkanal 17A bzw. 17B, wie in Fig. 4 zu erkennen ist. Dabei entspricht die lichte Breite der Sammelkanäle 17A und 17B jeweils annähernd dem Durchmesser eines Verschlusses 8, und die Fortbewegung der Formteile in den Sammelkanälen 17A und 17B sowie im Endkanal 18 erfolgt ebenso wie zuvor im Kanal 4 und in den Teilkanälen 13 durch eine schräg aufwärts gerichtete Luftströmung, die ihren Ursprung in Lufteintrittsöffnungen 10 der zuvor beschriebenen Art in der Grundplatte 5 hat.

Da die Sammelkanäle 17A und 17B senkrecht zu den Teilkanälen 13 verlaufen, muß am Übergang zwischen diesen beiden Arten von Kanälen deterministisch in den Materialfluß eingegriffen werden, um eine Verklemmung an dieser Stelle zu vermeiden. Zu diesem Zweck ist an den Ausgängen der Teilkanäle 13 jeweils eine Austragvorrichtung 19 vorgesehen, die den Ausgang des jeweiligen Teilkanals 13 entweder sperren oder aus ihm einen einzelnen Verschluß 8 ausgeben kann. Hierzu ist die Austragvorrichtung 19 als sternförmiges Rad 19 ausgebildet, das auf einer quer zu den Teilkanälen 13 und oberhalb derselben verlaufenden Welle 20 montiert ist, welche unter der Kontrolle einer (in den Figuren nicht dargestellten) Steuereinrichtung wahlweise arretierbar oder durch einen Antrieb um einen vorbestimmten Winkel drehbar ist. Der Antrieb und die Arretierung erfolgen jeweils im Bereich eines oder mehrerer der Lager 21A, 21B und 21C der Welle 20.

Die Form des Rades 19 so an die Form der Verschlüsse 8 angepaßt, daß bei Vorhandensein eines Verschlusses 8 unter dem Rad eine von dessen Zacken 22 in den Verschluß 8 eingreift und ihn bei Stillstand des Rades 19 festhält. Bei einer Drehung des Rades 19 um einen vorbestimmten Winkel wird genau ein Verschluß 8 aus dem Ausgang des Teilkanals 13 in den jeweils zugeordneten Sammelkanal 17A oder 17B befördert. Die Sternräder 19 der Teilkanäle 13 jeder der beiden symmetrischen Gruppen sind auf der Welle 20 zueinander fluchtend ausgerichtet und starr gekoppelt, so daß die Sperrung oder Ausgabe von Verschlüssen 8 bei allen Teilkanälen 13 einer Gruppe gleichzeitig erfolgt.

Andererseits sind die Räder 19 der linken, in den Sammelkanal 17A mündenden Gruppe von Teilkanälen 13 gegenüber den Rädern 19 der rechten, in den Sammelkanal 17B mündenden Gruppe auf der Welle 20 um den halben Winkel zwischen zwei Zacken 22 versetzt montiert. Hierdurch wird erreicht, daß bei einer Drehung der Welle 20 um den Winkel zwischen zwei Zacken 22 stets nur auf einer der beiden Seiten die vorderste Reihe von Verschlüssen in den jeweils zugeordneten Sammelkanal 17A oder 17B befördert wird, so daß, bei einer Abfolge von mehreren solchen Drehungen der Welle 20 um besagten Winkel die Verschlüsse aus den beiden Gruppen von Teilkanälen 13 abwechselnd entnommen und weiterbefördert werden. Voraussetzung hierfür ist außer der beschriebenen Anordnung der Sternräder 19 auf der Welle 20 auch eine geeignete Dimensionierung der Zacken 22 hinsichtlich ihrer Länge im Verhältnis zu den Abmessungen der Verschlüsse 8 sowie ihrer Anzahl pro Rad 19.

Die beiden frontal aufeinander zulaufenden Sammelkanäle 17A und 17B sind in der Mitte durch ein Umlenkstück 23 in Form eines beidseitig konkav abgerundeten Keiles getrennt, das die Bewegung der aus den Sammelkanälen 17A und 17B ankommenden Verschlüsse 8 abermals um 90° umlenkt, so daß ihre Bewegungsrichtung wieder derjenigen in den Teilkanälen 13 entspricht. Seitlich geführt wird die Bewegung nach der Umlenkung am Umlenkstück 23 durch Führungsschienen 24, die im Bereich des Umlenkstücks 23 zunächst einen trichterförmigen Übergang 25 und danach einen Endkanal 26 begrenzen, der zum Auslaß 27 der Vorrichtung führt und dessen lichte Breite wiederum annähernd dem Durchmesser eines Verschlusses 8 entspricht.

Die Fortbewegung der Verschlüsse 8 in den Sammelkanälen 17A und 17B sowie im Übergang 25 und im Endkanal 26 erfolgt wie in den zuvor beschriebenen Kanälen 4 und 13 durch eine schräg von unten eingeblasene Luftströmung, jedoch mit dem Unterschied, daß die geschlitzte Deckplatte 6 nicht mehr in diese Bereiche hineinreicht. Die Sammelkanäle 17A und 17B werden ebenso wie die Endabschnitte der Teilkanäle 13 von einer abnehmbaren Haube 28 abgedeckt, deren Form durch den Platzbedarf der Sternräder 19 vorgegeben ist, während den Übergang 25 und den Endkanal 26 ein von zwei seitlichen Stützen 29A und 29B getragener, aufklappbarer Deckel 30 nach oben abschließt. In Fig. 4 ist dieser Deckel 30 im aufgeklappten Zustand zu sehen.

Durch die abwechselnde Beschickung der Sammelkanäle 17A und 17B mit Gruppen von jeweils fünf Verschlüssen 8 durch die Sternräder 19 wird am Umlenkstück 23 ein Zusammenlaufen dieser Gruppen nach Art eines Reißverschlusses erreicht, wenn die Drehschrittrate der Welle 20 geeignet auf die Transportzeit der Verschlüsse 8 in den Sammelkanälen 17A und 17B abgestimmt ist. Auf diese Weise wird eine mögliche Verklemmung in dem trichterförmigen Übergang 25 zwischen dem Umlenkstück 23 und dem Endkanal 26 vermieden. Am Auslaß 27 erscheint eine serielle Abfolge einzelner Verschlüsse 8, wie sie der Vorrichtung an ihrem Einlaß 9 (Fig. 1 und 2) zugeführt wurde.

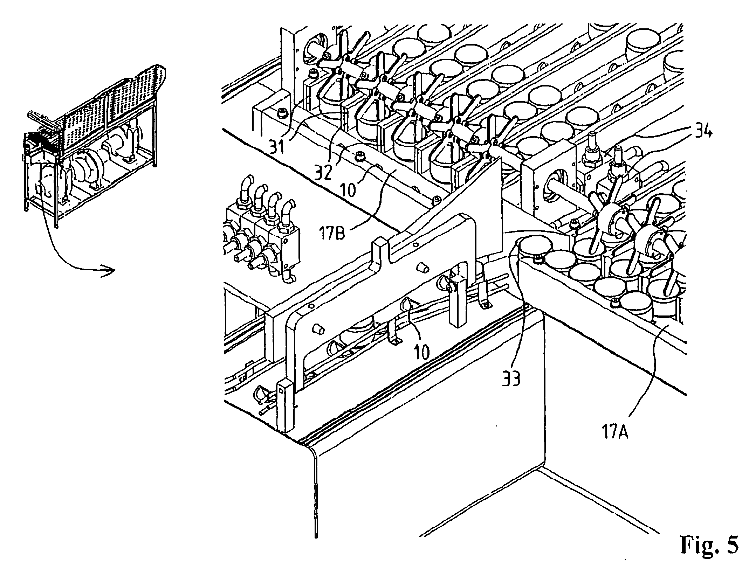

In Fig. 5, die den gleichen Teil der Vorrichtung wie Fig. 4 aus einer anderen Ansichtsrichtung zeigt, sind einige weitere Details der pneumatischen Steuerung der Fortbewegung der Verschlüsse 8 erkennbar. Um die Bewegung der Verschlüsse beim Übergang von den Teilkanälen 13 in die Sammelkanäle 17A und 17B besser zu kontrollieren und insbesondere Kollisionen der Verschlüsse 8 mit den zu den Sammelkanälen 17A und 17B weisenden Stirnflächen 31 der Trennwände 12 zu vermeiden, sind in diesen Stirnflächen 31 kleine Lufteintrittsdüsen 32 schräg angeordnet, aus denen im Betrieb eine zusätzliche Luftströmung schräg in die Sammelkanäle 17A und 17B eingeblasen wird, welche die Bewegung der Verschlüsse 8 auf das Umlenkstück 23 zu unterstützt.

Ferner sind auch in dem Umlenkstück 23 zwei weitere Lufteintrittsdtisen 33 vorgesehen, von denen in Fig. 5 nur eine ansatzweise sichtbar ist. Aus diesen Düsen 33 bläst im Betrieb der Vorrichtung eine weitere zusätzliche Luftströmung in Richtung auf den Endkanal 26 zu und unterstützt dadurch die Umlenkung der Verschlüsse 8 am Umlenkstück 23. Die beiden in den Figuren 4 und 5 sichtbaren Ventile 34 und die sich von diesen in Richtung des Umlenkstücks erstreckenden Schläuche dienen der Luftversorgung der Düsen 33.

Durch die gleichmäßige Anordnung der Lufteintrittsöffnungen 10 in der Grundplatte 5 und der Luftaustrittsöffnungen 11 in der Deckplatte 6 kann bei einer geeigneten Einstellung des Luftdurchsatzes an den Gebläsen 2A bis 2C sowie der Verteilung der Strömung in dem Gehäuse 1 mittels dort vorsehbarer Steuerklappen und dergleichen kann gewährleistet werden, daß innerhalb der Kanäle 4, 13, 17A, 17B und 26 ein bestimmter Mindestüberdruck gegenüber der Umgebung herrscht. Dadurch wird verhindert, daß aus der Umgebung über den Einlaß 9, den Auslaß 27, oder die Luftaustrittsöffnungen 11 Staubpartikel oder gesundheitsschädliche Keime an die zu transportierenden Verschlüsse 8 gelangen. Durch den gezielten Zusatz eines keimtötend wirkenden Gases, z.B. Ozon, zu der in das Gehäuse 1 eingeblasenen Luft, ist es sogar möglich, die Verschlüsse 8 während des Transportes zu sterilisieren.

Obgleich vorstehend von Formteilen die Rede ist und sich das bevorzugte Ausfiihrungsbeispiel speziell auf Verschlüsse für Getränkeflaschen bezieht, versteht es sich von selbst, daß die Erfindung zum gleichzeitigen Fördern und Temperieren von Gegenständen jeglicher Art verwendet werden kann, die im wesentlichen eine Becher- oder Schalenform aufweisen und ihrem Gewicht und ihrer Oberflächenbeschaffenheit nach zum Gleiten auf einem Luftkissen geeignet sind.

## Patentansprüche

1. Vorrichtung zum gleichzeitigen Temperieren und Fördern von Formteilen, mit einer zum Fortbewegen von Objekten geeigneten Transporteinrichtung und mit mindestens einem Gebläse (2A, 2B, 2C), mittels dessen die Objekte während der Fortbewegung mit einer Luftströmung beaufschlagbar sind, wobei die Transporteinrichtung einen geschlossenen Kanal (4) aufweist., in dessen Grundplatte (5) eine Vielzahl von Lufteintrittsöffnungen (10) mit in Längsrichtung des Kanals (4) und schräg zur Oberfläche ausgerichteter Blasrichtung angeordnet sind, in dessen der Grundplatte (5) gegenüberliegender Deckplatte (6) eine Vielzahl von Luftaustrittöffnungen (11) angeordnet sind, dessen lichte Höhe annähernd der Höhe eines einzelnen Formteils (8) entspricht, und dessen lichte Breite zumindest entlang eines Teils seiner Länge um ein vielfaches größer als die Breite eines einzelnen Formteils (8) ist, und wobei die von dem Gebläse (2A, 2B, 2C) erzeugte Luftströmung zur Fortbewegung und die Temperierung der Formteile (8) durch die Lufteintrittsöffnungen (10) in den Kanal (4) einleitbar ist, wobei sich der Kanal (4) an seinem Ende in eine Vielzahl von Teilkanälen (13) verzweigt, deren lichte Breite annähernd der Breite eines Formteils (8) entspricht, in denen die Fortbewegung der Formteile (8) ebenso wie zuvor im Kanal (4) erfolgt.

2. Vorrichtung nach Anspruch 1, **dadurch gekennzeichnet, daß** am Ende der Teilkanäle (13) jeweils eine Austragvorrichtung (19) angeordnet ist, welche den Ausgang des jeweiligen Teilkanals (13) entweder sperren oder aus ihm ein einzelnes Formteil (8) ausgeben kann.

3. Vorrichtung nach Anspruch 2, **dadurch gekennzeichnet, daß** die Austragvorrichtung (19) als sternförmiges Rad (19) ausgebildet ist, das auf einer quer zum Teilkanal (13) und oberhalb desselben verlaufenden, wahlweise arretierbaren oder durch einen Antrieb um einen vorbestimmten Winkel drehbaren Welle (20) montiert ist, und daß die Form des Rades (19) so an die Form der Formteile (8) angepaßt ist, daß bei Vorhandensein eines Formteils (8) unter dem Rad (19) eine von dessen Zacken (22) dergestalt in Eingriff mit dem Formteil (8) steht, daß das Formteil (8) bei Stillstand des Rades (19) von diesem festgehalten und bei einer Drehung desselben um einen vorbestimmten Winkel aus dem Ausgang des Teilkanals (13) befördert wird.

4. Vorrichtung nach Anspruch 2 oder 3, **dadurch gekennzeichnet, daß** die Austragvorrichtungen (19) der Teilkanäle (13) gruppenweise so miteinander gekoppelt sind, daß die Sperrung oder Formteilausgabe bei allen Teilkanälen (13) einer Gruppe gleichzeitig erfolgt.

5. Vorrichtung nach einem der Ansprüche 2 bis 4, **dadurch gekennzeichnet, daß** die Ausgänge der Teilkanäle (13) in Sammelkanäle (17A, 17B) münden, deren Ausgänge wiederum in einen einzigen gemeinsamen Endkanal (26) münden, wobei die lichte Breite der Sammelkanäle (17A, 17B) und des Endkanals (26) jeweils annähernd der Breite eines Formteils (8) entspricht, und zur Fortbewegung der Formteile (8) in den Sammelkanälen (17A, 17B) und im Endkanal (26) Lufteintrittsöffnungen (10) gleicher Art wie im Kanal (4) und in den Teilkanälen (13) vorgesehen sind.

6. Vorrichtung nach Anspruch 5, **dadurch gekennzeichnet, daß** alle Teilkanäle (13) parallel zueinander und zum Kanal (4) verlaufen, und daß zwei spiegelsymmetrische, senkrecht zu den Teilkanälen (13) aufeinander zulaufende Sammelkanäle (17A, 17B) vorgesehen sind, deren Ausgänge an einem symmetrischen Umlenkstück (23) in der Form eines beidseitig konkav gekrümmten Keiles trichterförmig in den gemeinsamen, wiederum parallel zu den Teilkanälen (13) verlaufenden Endkanal (26) übergehen.

7. Vorrichtung nach Anspruch 6, **dadurch gekennzeichnet, daß** die Austragvorrichtungen (19) der in einen gemeinsamen Sammelkanal (17A; 17B) mündenden Teilkanäle (13) jeweils eine Gruppe bilden, und daß die beiden Gruppen mechanisch so miteinander gekoppelt sind, daß die Formteilausgabe abwechselnd entweder nur in den einen, oder nur in den anderen der Sammelkanäle (17A, 17B) erfolgt.

8. Vorrichtung nach Anspruch 7, **dadurch gekennzeichnet, daß** eine Steuereinrichtung vorgesehen ist, welche die Austragvorrichtungen so ansteuert, daß zu jedem Zeitpunkt nur Formteile aus einem der beiden Sammelkanäle (17A, 17B) an dem Umlenkstück (23) ankommen.

9. Vorrichtung nach einem der Ansprüche 2 bis 8, **dadurch gekennzeichnet, daß** am Übergang des Kanals (4) in die Teilkanäle (13) an den Stirnflächen der zwischen den Teilkanälen (13) befindlichen Trennwände (12) keilförmige Abweiser (16) angeordnet sind, die nach Art eines Schiffsruders drehbar gelagert und durch einen Antrieb in eine periodische Pendelbewegung versetzbar sind.

10. Vorrichtung nach einem der Ansprüche 1 bis 9, **dadurch gekennzeichnet, daß** sie mindestens ein Filter zum Reinigen der von dem Gebläse (2A, 2B, 2C) erzeugbaren Luftströmung aufweist.

11. Vorrichtung nach einem der Ansprüche 1 bis 10, **dadurch gekennzeichnet, daß** sie eine Temperiereinrichtung aufweist, mittels derer die Temperatur der von dem Gebläse (2A, 2B, 2C) erzeugbaren Luftströmung einstellbar ist.

12. Vorrichtung nach einem der Ansprüche 1 bis 11, **dadurch gekennzeichnet, daß** der Luftdurchsatz des Gebläses (2A, 2B, 2C) so einstellbar ist, daß innerhalb sämtlicher Transporträume (4, 13, 17A, 17B, 25, 26), in denen sich die Formteile (8) bewegen, ein vorbestimmter Mindestüberdruck gegenüber der Umgebung herrscht.

## Claims

1. Apparatus for simultaneously conveying and controlling the temperature of formed parts, with transport means suited for conveying objects and with at least one blower (2A, 2B, 2C) by which the objects can be subjected to an air stream during their movement, wherein the transport means comprise a closed duct (4), the duct (4) having a base plate (5) with a plurality of air inlet openings (10) having a blowing direction in the longitudinal direction of the duct (4) and at an angle to the surface, the duct (4) having a cover plate (6) opposite of the base plate (5) with a plurality of air outlet openings (11), the clear height of the duct (4) corresponding approximately to the height of a formed part (8) and the clear width of the duct (4) at least along a portion of its length being larger by a multiple than the width of each formed part (8), and wherein the air stream for conveying and controlling the temperature of the formed parts (8) generated by the blower (2A, 2B, 2C) can be fed into the duct (4) via the air inlet openings (10), wherein the duct (4) at its end branches out into a plurality of subducts (13), the clear width of the subducts (13) corresponding approximately to the width of a formed part (8) and the movement of the formed parts (8) within the subducts (13) being effected as in the duct (4).

2. Apparatus according to claim 1, **characterized in that** at the end of each of the subducts (13) discharge means (19) are arranged, which can either block the exit of the respective subduct (13) or can dispense a single formed part (8) from it.

3. Apparatus according to claim 2, **characterized in that** the discharge means (19) are embodied as a star-shaped wheel (19), which is mounted on a shaft that is arranged transverse to the subduct (13) and above the same, and that can either be arrested or can be rotated by a predetermined angle by a driving means, and **in that** the shape of the wheel (19) is adapted to the shape of the formed parts (8), such that in the presence of a formed part (8) under the wheel (19) one of its spikes (22) meshes with the formed part (8) in such a manner that the formed part (8) is retained by the wheel (19) when the wheel (19) is at a standstill and that during the rotation of the same by a predetermined angle the formed part (8) is discharged from the exit of the subduct (13).

4. Apparatus according to claim 2 or 3, **characterized in that** the discharge means (19) of the subducts (13) are coupled group-wise with one another, such that the blocking or the discharging of formed parts takes place simultaneously for all subducts (13) of a group.

5. Apparatus according to any of claims 2 to 4, **characterized in that** the exits of the subducts (13) open out into collecting ducts (17A, 17B), the exits of which opening out into a single common end duct (26) in turn, wherein the clear width of the collecting ducts (17A, 17B) and of the end duct (26) each correspond approximately to the width of a formed part (8), and wherein for the movement of the formed parts (8) in the collecting ducts (17A, 17B) and in the end duct (26) air inlet openings (10) of the same type as in the duct (4) and in the subducts (13) are provided.

6. Apparatus according to claim 5, **characterized in that** all subducts (13) are arranged parallel to one another and to the duct (4), and that two mirror-symmetrical collecting ducts (17A, 17B) approaching each other perpendicularly to the subducts (13) are provided, the exits of which transition at a symmetrical deflecting piece (23) in the shape of a wedge being concavely curved on both sides in a funnel-like manner into the common end duct (26) which is in turn parallel to the subducts (13).

7. Apparatus according to claim 6, **characterized in that** the discharge means (19) of the subducts (13) that open out into a common collecting duct (17A; 17B) each make up a group, and that both groups are mechanically coupled with one another, such that the discharging of formed parts alternatingly either takes place into the one or into the other collecting duct (17A, 17B).

8. Apparatus according to claim 7, **characterized in that** control means are provided, which control the discharge means, such that at any point in time formed parts from only one of both collecting ducts (17A, 17B) arrive at the deflecting piece (23).

9. Apparatus according to any of claims 2 to 8, **characterized in that** at the transition of the duct (4) into the subducts (13) wedge-shaped deflectors (16) are provided at the front surface of the separating walls (12) arranged between the subducts (13), that are rotatably arranged in the manner of a ship's rudder and can be moved in a periodic pendulum motion by a drive means.

10. Apparatus according to any of claims 1 to 9, **characterized in that** the apparatus comprises at least one filter for cleaning the air stream provided by the blower (2A, 2B, 2C).

11. Apparatus according to any of claims 1 to 10, **characterized in that** the apparatus comprises means for controlling the temperature, by which the temperature of the air stream generated by the blower (2A, 2B, 2C) can be set.

12. Apparatus according to any of claims 1 to 11, **characterized in that** the throughput of air of the blower (2A, 2B, 2C) is adjustable, such that within any of the transport areas (4, 13, 17A, 17B, 25, 26) in which the formed parts (8) move, there is a predetermined minimum overpressure compared to the environment.

## Revendications

1. Dispositif pour simultanément maintenir en température et transporter des pièces moulées, avec un dispositif de transport apte à déplacer des objets et avec au moins une soufflerie (2A, 2B, 2C) au moyen de laquelle les objets peuvent être exposés à un courant d'air pendant leur déplacement, le dispositif de transport comprenant un canal (4) fermé, dans la plaque de base (5) duquel est placée une pluralité d'ouvertures (10) d'entrée d'air ayant une direction de soufflage orientée dans la direction longitudinale du canal (4) et à l'oblique par rapport à la surface, et dans la plaque de couverture (6), opposée à la plaque de base (5) duquel est placée une pluralité d'ouvertures (11) de sortie d'air, dont la hauteur libre correspond approximativement à la hauteur d'une pièce moulée (8), dont la largeur libre sur au moins une partie de sa longueur est nettement supérieure à la largeur d'une pièce moulée (8), et dans lequel le courant d'air produit par la soufflerie (2A, 2B, 2C) pour le déplacement et le maintien en température des pièces moulées (8) peut être introduit dans le canal (4) à travers les ouvertures (10) d'entrée d'air, dans lequel le canal (4) se ramifie à son extrémité en une pluralité de canaux secondaires (13) dont la largeur libre correspond approximativement à la largeur d'une pièce moulée (8) et dans lesquels le déplacement des pièces moulées (8) s'effectue comme précédemment dans le canal (4).

2. Dispositif selon la revendication 1, ***caractérisé en ce qu'**à* l'extrémité de chaque canal secondaire (13) est placé un dispositif d'évacuation (19), qui soit peut bloquer la sortie du canal secondaire (13) respectif, soit peut en délivrer une pièce moulée (8).

3. Dispositif selon la revendication 2, ***caractérisé en ce que*** le dispositif d'évacuation (19) est conformé en roue en étoile (19), qui est montée sur un arbre (20) s'étendant transversalement au canal secondaire (13) et au-dessous de celui-ci, immobilisable au choix ou pouvant être tourné d'un angle prédéterminé par un entraînement, et ***en ce que*** la forme de la roue (19) est adaptée de telle manière à la forme des pièces moulées (18) qu'en présence d'une pièce moulée (8) sous la roue (19), l'une de ses dents (22) se met en prise avec la pièce moulée (8) de telle sorte qu'en cas d'arrêt de la roue (19), la pièce moulée (8) est tenue par elle et, en cas de rotation de celle-ci d'un angle prédéterminé, elle est transportée hors de la sortie du canal secondaire (13).

4. Dispositif selon la revendication 2 ou 3, ***caractérisé en ce que*** les dispositifs d'évacuation (19) des canaux secondaires (13) sont couplés les uns aux autres par groupe de telle manière que le blocage ou la délivrance de pièces moulées s'effectue simultanément pour tous les canaux secondaires (13) d'un groupe.

5. Dispositif selon l'une quelconque des revendications 2 à 4, ***caractérisé en ce que*** les sorties de canaux secondaires (13) débouchent dans des canaux de collecte (17A, 17B), dont les sorties débouchent quant à elles dans un unique canal terminal commun (26), la largeur libre des canaux de collecte (17A, 17B) et du canal terminal (26) correspondant à chaque fois approximativement à la largeur d'une pièce moulée (8) et, pour le transport des pièces moulées (8), des ouvertures (10) d'entrée d'air, de même nature que dans le canal (4) et dans les canaux secondaires (13), sont prévues dans les canaux de collecte (17A, 17B) et dans le canal terminal (26).

6. Dispositif selon la revendication 5, ***caractérisé en ce que*** tous les canaux secondaires (13) s'étendent parallèlement les uns aux autres et en direction du canal (4), et ***en ce que*** deux canaux de collecte (17A, 17B) symétriques miroir l'un de l'autre et convergeant perpendiculairement aux canaux secondaires (13) sont prévus, dont les sorties, au niveau d'un élément de déviation (23) en forme de coin à courbure concave de chaque côté, se raccordent à la manière d'un entonnoir avec le canal terminal (26) commun s'étendant de nouveau parallèlement aux canaux secondaires (13).

7. Dispositif selon la revendication 6, ***caractérisé en ce que*** les dispositifs d'évacuation (19) des canaux secondaires (13) débouchant dans un canal de collecte commun (17A ; 17B) forment à chaque fois un groupe, et ***en ce que*** les deux groupes sont couplés mécaniquement l'un à l'autre de telle manière que la délivrance des pièces moulées s'effectue en alternance seulement dans le premier ou seulement dans l'autre des canaux de collecte (17A, 17B).

8. Dispositif selon la revendication 7, ***caractérisé en ce qu'***un dispositif de commande est prévu, qui commande les dispositifs d'évacuation de telle manière qu'à tout moment, seules des pièces moulées venant de l'un des deux canaux de collecte (17A, 17B) arrivent sur l'élément de déviation (23).

9. Dispositif selon l'une quelconque des revendications 2 à 8, ***caractérisé en ce qu'***au niveau de la transition du canal (4) vers les canaux secondaires (13), sur les faces frontales des cloisons (12) situées entre les canaux secondaires (13) sont placés des déviateurs cunéiformes (16) qui sont montés rotatifs à la manière d'un gouvernail de navire et qui peuvent être mis dans un mouvement pendulaire périodique par un entraînement.

10. Dispositif selon l'une quelconque des revendications 1 à 9, ***caractérisé en ce qu'***il présente au moins un filtre pour nettoyer le courant d'air pouvant être produit par la soufflerie (2A, 2B, 2C).

11. Dispositif selon l'une quelconque des revendications 1 à 10, ***caractérisé en ce qu'***il présente un dispositif de maintien en température, au moyen duquel la température du courant d'air pouvant être produit par la soufflerie (2A, 2B, 2C) peut être ajustée.

12. Dispositif selon l'une quelconque des revendications 1 à 11, ***caractérisé en ce que*** le débit d'air de la soufflerie (2A, 2B, 2C) est réglable de telle manière qu'à l'intérieur de tous les espaces de transport (4, 13, 17A, 17B, 25, 26) dans lesquels se déplacent les pièces moulées (8), il règne une surpression minimale prédéterminée par rapport à l'environnement.
